# EUROPEAN PATENT APPLICATION

(11) **EP 4 653 558 A1**
(43) Date of publication of application: **26.11.2025**
(21) Application number: 25158508.9
(22) Date of filing: 18.02.2025
(51) Int. Cl.: C22B 7/00, B22C 1/00, B22C 9/10, B22D 1/00, C22B 1/14, C22B 7/04

(54) **PROCESS FOR THE PRODUCTION OF FOUNDRY CORES**

(30) Priority: 24.05.2024 IT 202400011803
(71) Applicant: Bouabdali, Giacomo, 36100 Vicenza (VI) (IT)
(72) Inventor: Bouabdali, Giacomo, 36100 Vicenza (VI) (IT)
(74) Representative: Burchielli, Riccardo

(57) **Abstract**

The invention relates to a process for the production of foundry cores from steel mill slag comprising the steps of slag selection and preparation, slag reduction, mixing with sand and binders, and core preparation.

## Description

The present invention concerns a process for the production of foundry cores.

### Field of the invention

The invention relates to the foundry and steel industry and in particular to the technical field of foundry core production.

More specifically, the invention relates to a process for the production from foundry cores using derivatives of steelworks.

### Prior art

Nowadays, in the foundry industry, foundry cores are mainly produced through the use of sands, particularly silica and/or quartz sands.

However, the use of such sands has certain disadvantages, including considerable environmental impacts and high costs.

These aspects are becoming increasingly important in view of the growing importance of the circular economy and the increasing cost of raw materials and their transport.

Foundry cores are used to obtain cavities, holes or special shapes, such as hollows or recesses, in aluminium castings.

In certain types of fusions, cores make it possible to obtain sub-square shapes that could not be obtained without their use. Without cores, it would not be possible to produce various types of objects that we find on the market today.

It is understandable how the use of foundry cores is necessary in today's economy.

Therefore, there is a need in the industry to find processes or solutions to reduce environmental impact and limit costs in the production of foundry cores.

### Aim fo the invention

It is therefore an aim of the present invention to provide a process for the production of foundry cores which solves the above-mentioned drawbacks and criticalities.

It is a further aim of the present invention to provide a process for the production of foundry cores which has a lower environmental impact than known processes.

A further aim of the present invention is to provide a process for the production of foundry cores that does not exclusively use sand.

It is a further aim of the present invention to provide a process for producing foundry cores that has a lower cost impact than known processes.

A further aim of the present invention is to provide a process for the production of cores which allows for the reuse of slag or scrap from steelworks.

A further aim of the present invention is to provide a process for the production of foundry cores which is easy and inexpensive to manufacture and use by virtue of the advantages achieved.

### Detailed description

With reference to the above-mentioned figures, a preferred embodiment of a process for the production of foundry cores according to the invention is represented.

The process for the production of foundry cores according to the invention presents the following steps:
- slag selection and preparation;
- slag reduction;
- mixing;
- realisation of foundry cores.

The above-mentioned steps will be described in more detail in the following of the present invention.

In the following description, particular reference is made to black slag.

In different embodiments, other types of slag can be used.

In the black slag selection and preparation stage, steel mill slag, which is produced during the fusion process for example in the electric arc furnace (EAF) or blast furnace, is collected and cooled.

These black slags, which include silicon, aluminium and calcium oxides, are crushed and ground to a fine-grained product in the reduction stage.

In other words, the slag selection and preparation step has the following sub-steps:
- collection of the black slag produced in the steelworks processes;
- cooling of the black slag.

The cooling step is necessary due to the high temperatures of the steelworks processes from which the black slag originates.

The high temperature of black slag would in fact make its processing more complex.

In the reduction step, black slag is crushed and milled to the desired grain size.

In preferred forms, black slag is reduced to a fine grain size.

In the mixing stage, the reduced black slag is mixed with sand and binders commonly used for the production of foundry cores.

The resulting mixture is then moulded into specific shapes, corresponding to the desired core shapes, and subjected to drying.

The cores, once dried, are ready for use in foundry casting processes.

Advantageously, cores produced with this process maintain the same mechanical and thermal properties as traditional sand cores, ensuring a high quality of the end product.

Advantageously, the use of black steel mill slag reduces the need to extract sand, thus decreasing the environmental impact associated with this activity.

In particular, for the same amount of cores produced, less sand can be used and replaced by black steel mill slag.

Furthermore, the transformation of black steel mill slag into a useful material for foundries is a concrete example of circular economy, promoting the reuse of industrial waste.

Equally advantageously, black slag costs less than traditional sand and provides significant cost savings for foundries.

Still advantageously, cores made from black slag mixed with sand offer comparable performance to cores made solely from sand, while maintaining the quality and efficiency of foundry casting processes.

In other words, the innovation described allows foundry cores to be produced using steel mill slag, offering both environmental and economic benefits.

The use of slag as an alternative to sand alone is a more economical and sustainable solution.

In fact, this process meets the need for sustainability and cost reduction in the metallurgy sector, promoting a responsible and beneficial use of available resources.

From the description made, the characteristics of the process for the production of foundry cores, the subject matter of the invention, are clear, as are its advantages.

Finally, it is clear that numerous other variations may be made to the process in question, without departing from the principles of novelty inherent in the inventive idea, just as it is clear that, in the practical implementation of the invention, the materials, shapes and sizes of the illustrated details may be any as required and the same may be replaced with equivalent ones.

Where the features and techniques mentioned in any of the claims are followed by reference marks, those reference marks have been included for the sole purpose of increasing the intelligibility of the claims and, accordingly, those reference marks have no limiting effect on the interpretation of each element identified by way of example by those reference marks.

## Claims

1. Process for the production of foundry cores from steel mill slag **characterized by** comprising the following steps:
- a selection and preparation step of said slag;
- a reduction step of said slag;
- a mixing step;
- a realization step of said cores.

2. Process for the production of foundry cores according to claim 1 **characterized in that** said selection and preparation step of said slag comprises the following sub-steps:
- a sub-step of collecting said slag;
- a sub-step of cooling said slag.

3. Process for the production of foundry cores according to claim 1 **characterized by** the fact that in said reduction step of said slag, the crushing and grinding of said slag takes place.

4. Process for the production of foundry cores according to claim 3 **characterized by** the fact that in said reduction step of said slag, said slag is reduced to a fine grain size.

5. Process for the production of foundry cores according to one or more of the preceding claims **characterized by** the fact that in said realization step of said cores, the mixture obtained as a result of said mixing step is molded and subjected to drying.

6. Process for the production of foundry cores according to one or more of the preceding claims **characterized by** the fact that said slag is black slag..

7. Process for the production of foundry cores according to one or more of the preceding claims **characterized by** the fact that said slag comprises oxides of silicon, aluminum, and calcium.

8. Foundry core made as at process according to one or more of claims 1-7.
